Europäisches Patentamt

European Patent Office

Office européen des brevets

(11) Publication number: **0 190 941**
A2

# (12) EUROPEAN PATENT APPLICATION

(21) Application number: 86300843.9

(22) Date of filing: 07.02.86

(51) Int. Cl.⁴: **B 60 R 9/04**
B 62 D 63/06

(30) Priority: 08.02.85 GB 8503187

(43) Date of publication of application:
13.08.86 Bulletin 86/33

(84) Designated Contracting States:
AT BE CH DE FR IT LI LU NL SE

(71) Applicant: Hardacre, David
253 Leek Road Endon Stoke-on-Trent
Staffordshire(GB)

(72) Inventor: Hardacre, David
253 Leek Road Endon
Stoke-on-Trent Staffordshire(GB)

(72) Inventor: Clowes, Robert John
Motivation Bagnall
Stoke-on-Trent Staffordshire(GB)

(74) Representative: Campbell, Iain Angus et al,
Swindell & Pearson 44 Friar Gate
Derby DE1 1DA(GB)

(54) Improved load carrying arrangement.

(57) A load carrying arrangement especially for a car or estate car comprises a roof rack and a trailer mountable on the roof rack or towable behind a car.

Fig 5

EP 0 190 941 A2

0190941

## Improved Load Carrying Arrangement

The present invention concerns improvements in relation to load carrying arrangements, especially but not exclusively for use with saloon cars, estate cars and light vans.

There are currently two main methods of supplementing the load carry capacity of cars and vans; these are fitting a rack to the roof of the vehicle and towing a load carrying trailer behind the vehicle. It is often found that a trailer can result in inefficiency especially when it is being towed unloaded. This inefficiency is due mainly to the enforced speed reduction of the vehicle to maintain it within legal limits for a vehicle/trailer combination.

It is an object of the present invention to obviate and mitigate this and other disadvantages.

According to the present invention there is provided a load carrying arrangement comprising a first assembly adapted for removable fixing to the roof of a vehicle and providing a first load supporting platform and a second assembly adapted for removable mounting to the first assembly, incorporating a second load platform, ground engageable wheels and attachment means for releasably fixing it to a towing hitch assembly on the vehicle.

Preferably the first assembly comprises a frame including two longitudinal members and cross members extending between said longitudinal members. Preferably brackets are fixed to the longitudinal or cross members of said first assembly and have fixing means for rigidly but removably fixing the assembly to a vehicle roof, for example at the gutters thereof. Preferably the first assembly incorporates roller or slide means to assist in manoeuvring the second assembly on to the first assembly. Preferably said roller or slide means are fixed to a rear cross member of the first assembly and are adapted to engage longitudinally extending members of the second assembly.

Preferably the first assembly incorporates location means for locating the second assembly thereon. Means for locking the second assembly to the first assembly may be provided. Preferably said location means are formed by a portion or portions of each longitudinal members which is lowered with respect to the remainder of said member to provide a recess adapted to accommodate certain members of the second assembly.

Preferably the second assembly includes at least one pair of longitudinal extending members and a plurality of cross members fixed to and extending transversely of said longitudinal members. Preferably at one end thereof the longitudinal members extend into a hitch assembly adapted to removably connect the second assembly to a corresponding towing hitch assembly on the vehicle. Preferably reinforcing means are incorporated in said hitch assembly.

Preferably a pair of wheels are mounted by suspension units to the second assembly.

Preferably roller, wheel, or other guide means are rotatably mounted to the underside of the second assembly to assist in the manoeuvring of the second assembly on to the first assembly.

Preferably the spacing between said roller or other means is equal to the spacing between the longitudinal members of the first assembly. Preferably a floor is provided on the second assembly the floor comprising a metal mesh.

Preferably substantially vertical sockets are provided on the second assembly and, if desired the first assembly, to accommodate removable load restraining upright members or removable weatherproof covers.

An embodiment of the present invention will now be described by way of example only with reference to the accompanying drawings in which:

Fig. 1 shows a plan of a first assembly of a load support arrangement;

Fig. 2 shows a sectional elevation through the line II-II of Fig. 1;

Fig. 3 shows a plan of a second assembly of the load support arrangement;

Fig. 4 shows an elevation of the the second assembly;

Fig. 5 shows a side elevation of the second assembly mounted on the first assembly; and

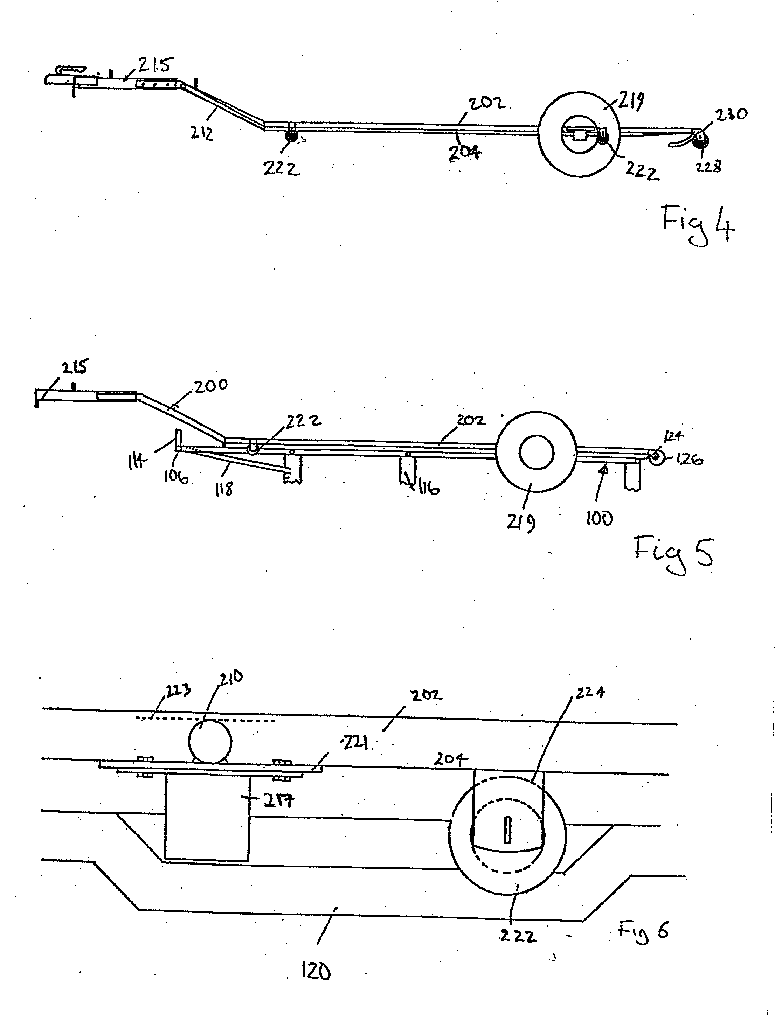

Fig. 6 shows a detail side elevation of the arrangement on an enlarged scale.

A load support arrangement comprises a combined roof rack and trailer adapted for mounting to the roof of a saloon car but more especially an estate car or light van.

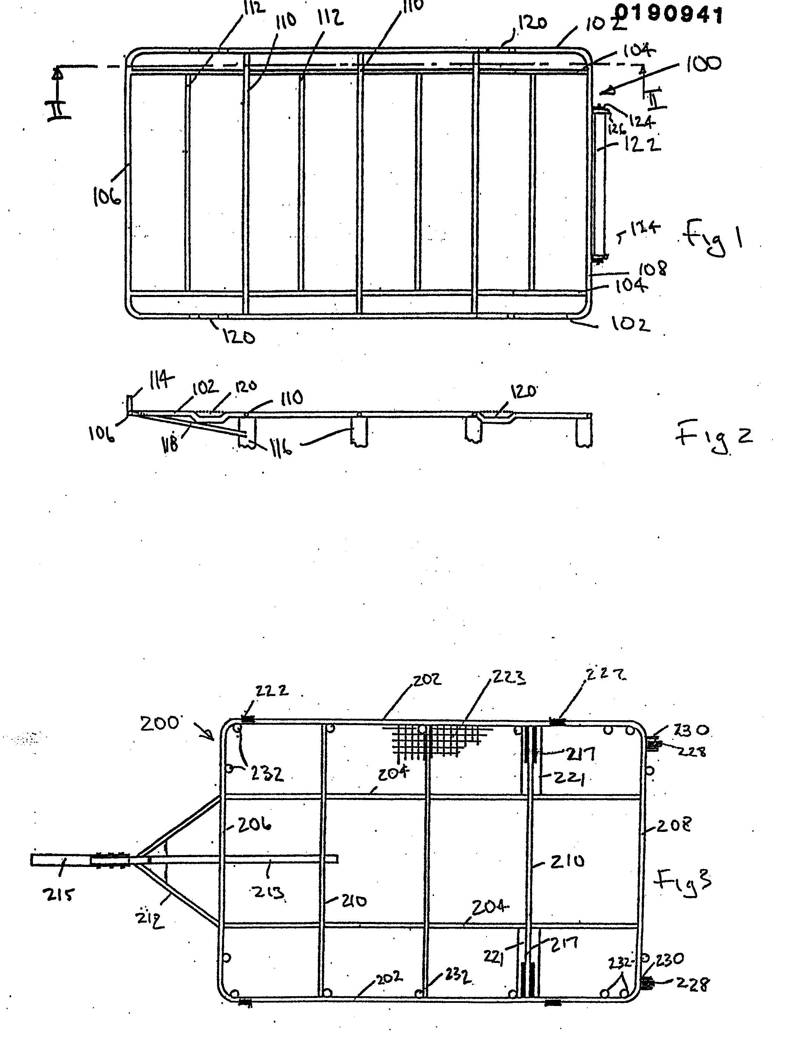

Figs. 1 and 2 show a first or roof rack assembly which is manufactured by welding or any other suitable assembly technique from tubular steel members. The first assembly 100, in the embodiment shown, includes four longitudinal members arranged in an outer pair 102 and an inner pair 104. End cross members 106 and 108 extend between the outer pair 102, the ends of the inner pair 104 being fixed to the end cross member. Intermediate cross members 110 extend between the outer pair 102 and further intermediate cross members 112 extend between the inner pair 104.

It can be seen from Fig. 2 an additional upper cross member 114 is provided at the front of the roof rack which is provided also with mounting legs 116 fixed to and extending downwardly from either the outer or inner pair of longitudinal members thereby enabling the roof rack to be mounted on roofs of different widths. The mounting legs 116 may take any conventional form which enables the roof rack to be removably clamped to the vehicle roof at, for example, its gutter. A strengthening strutt 118 extends from each front mounting leg to the front cross member 106. At predetermined locations along the outer pair of longitudinal members 102 there are provided lowered locating regions 120, the function of which will become evident below. The locating regions are provided in transversely opposed pairs adjacent to the front and rear of the members.

A cylindrical roller 122 having flanges 126 at its ends is rotatably mounted on brackets 124 extending rearwardly of the rear cross member 108.

The second assembly or trailer 200 is illustrated in Figs. 3 and 4 and comprises a framework incorporating outer and inner longitudinal members 202, 204. A plurality of cross members extend laterally of the longitudinal member and include front and rear cross members 206, 208 and intermediate cross members 210. The inner longitudinal members 204 are mounted below the cross members 210 but are sloped upwardly such that their rear ends are joined to the inner face of the rear cross member 208. The lateral spacing of the inner longitudinal members 204 is slightly less than the lateral spacing between flanges 126 of the roller 122 mounted on the rear of the roof rack 100. These inner members are provided with converging forward extensions 212 which, together with a swan neck member 213 fixed to the front cross member 206 and its neighbouring inner cross member 210, support a ball hitch mounting assembly 215 by which the trailer may be mounted to a standard towing hitch fitted to the towing vehicle.

Suspension units 217 with ground wheels 219 are fixed by plates 221 mounted on the underside of outer longitudinal members 202 and the rear inner cross member 210. The suspension units are of a standard construction and do not form part of the present invention so will not be described in any detail in this specification.

The inner cross members 210 are fixed to the outer longitudinal member 202 in such a way that their upper surface is slightly below the upper surface of said outer longitudinal member whereby when a metal mesh floor 223 is fixed to the trailer its upper surface is substantially flush with the upper surface of the outer longitudinal members 202 and the front and rear cross members 206 and 208.

The framework of the trailer is manufactured from metal tubing welded or fixed together by any suitable means.

Each outer longitudinal member 202 is provided adjacent its front and rear with a profiled wheel 222 mounted to the underside of the member 202 in an adjustable manner by bracket 224.

A further pair of wheels 228 are mounted by bracket 230 extending from the rear cross member 208.

A plurality of tubular sockets 232 are fixed to the longtiduinal and cross members of the second assembly. Each socket may accommodate tubular perimeter rails to provide lateral restraints for loads carried on the trailer or legs for a weatherproof covering for the trailer.

It will be realised that with the roof rack unloaded the trailer can be loaded thereon so that it can be transported on rather than behind the vehicle thereby allowing the vehicle to operate under normal road traffic regulations. With the trailer on the roof rack it is possible for the assembly of roof rack and trailer to carry a load.

To mount the trailer on the roof rack it is necessary to unhitch it from the towing hitch of the vehicle and to raise the front end thereof such that the hitch assembly 215 rests approximately centrally on the roller 122 of the roof rack. The trailer can then be pushed towards the front of the vehicle and eventually its ground wheels 219 would be raised off the ground, at which stage ground engagement is taken over by the rear wheels 228. The converging forward extension 212 of the inner longitudinal members 204 operating in conjunction with the flanges 126 of the roller 122 serve to centralise the trailer on the roof rack as it is loaded.

Further forward movement of the trailer is carried out until its centre of gravity is forward of the axis of the roller 122 at which point it pivots about the roller to bring the trailer to a substantially horizontal position where the forward wheels 222 mounted in the underside of the outer longitudinal members 202 at the front of the trailer engage the top surface of the outer londitudinal members 102 of the roof rack. In this condition the forward wheels 222 will be located in front of the rear locating means 120 on the roof rack outer longitudinal members 102. Further forward movement can take place with the engagement between the trailer and roof rack being by means of the forward wheels 222 and the roller 122. Eventually the rear wheels 222 of the trailer will mount the rear end of the outer longitudinal members 102 of the roof rack and forward movement can continue until all sets of wheels 222 fall into the lower locating regions 120 of the roof rack. It will be noted at this stage from Fig. 7 that the rear locating region 120 is sufficiently long to accommodate the suspension unit 217 as well as the rear wheels 222.

The trailer is now firmly located on the roof rack and, if desired, can carry a load on its surface 223. Additional locking means to more firmly clamp the trailer to the roof rack may be utilised but in practice it has been found that the lower locating regions 120 provide sufficient location.

To remove the trailer from the roof rack the reverse operation is carried out that is the rear cross member 208 of the trailer is lifted and moved backwardly to disengage the rollers 222 from the locating region, thereafter the dismounting operation being the reverse of the mounting operation described above.

Various modifications can be made without departing from the scope of the invention, for example the rear roller 122 could be replaced by a pair of wheels and the guide wheels on the other side of the trailer could be replaced by low friction guide blocks. The roof rack need not be a unitary assembly comprising longitudinal members and cross members but could be made up from a plurality of individually mounted cross members. Removable lateral load restraining means could be provided for the roof rack said means comprising substantially inverted U-shaped members the end of which are accommodated in tubular sockets provided on the roof rack.

Claims:

1.    A load carrying arrangement characterised in that it comprises a first assembly (100) adapted for removable fixing to the roof of a vehicle and providing a first load supporting platform and a second assembly (200) adapted for removable mounting to the first assembly, incorporating a second load platform, ground engageable wheels (219) and attachment means (215) for releasably fixing it to a towing hitch assembly on the vehicle.

2.    An arrangement as claimed in claim 1 characterised in that the first assembly (100) incorporates roller or slide means (228) fixed to a rear cross member of the first assembly to assist in manoeuvring the second assembly (200) on to the first assembly, the roller or slide means being adapted to engage longitudinally extending members (204) of the second assembly.

3.    An arrangement as claimed in any of claims 1 to 3 characterised in that the first assembly (100) incorporates location means (120) for locating the second assembly thereon said location means being formed by a portion or portions of longitudinal members (102) which are lowered with respect to the remainder of said member to provide a recess adapted to accommodate certain members of the second assembly.

4.   An arrangement as claimed in any one of the preceding claims characterised in that the second assembly (200) includes at least one pair of longitudinally extending members (202, 204) and a plurality of cross members (210) fixed to and extending transversely of said longitudinal members, one pair of longitudinal members (204) at one end thereof extending into a hitch assembly (215) adapted to removably connect the second assembly to a corresponding towing hitch assembly on the vehicle.

5.   An arrangement as claimed in claim 4 characterised in that roller, wheel, or other guide means (222) are rotatably mounted to the underside of the second assembly (200) to assist in the manoeuvring of the second assembly on to the first assembly (100).

6.   An arrangement as claimed in claim 5 characterised in that the spacing between said roller or other means (222) is equal to the spacing between longitudinal members (102) of the first assembly.

7.   An arrangement as claimed in any of claims 4, 5 or 6 characterised in that a floor (223) is provided on the second assembly (200), the floor (223) comprising a metal mesh.

8.   An arrangement as claimed in any one of claims 4 to 7 characterised in that substantially vertical sockets are provided on the second assembly and, if desired the first assembly, to accommodate removable load restraining upright members or removable

weatherproof covers.

0190941

Fig 1

Fig 2

Fig 3

Fig 4

Fig 5

Fig 6